(19) **Europäisches Patentamt / European Patent Office / Office européen des brevets**

(11) **EP 1 403 137 B1**

(12) **EUROPEAN PATENT SPECIFICATION**

(45) Date of publication and mention
of the grant of the patent:
**14.01.2009 Bulletin 2009/03**

(51) Int Cl.:
***B60Q 1/48*** (2006.01)

(21) Application number: **03021998.4**

(22) Date of filing: **30.09.2003**

(54) **Movable body circumstance monitoring apparatus**

Umgebungserfassung für einen beweglichen Körper

Dispositif pour détecter l'environnement d'un corps mobile

(84) Designated Contracting States:
**DE FR GB**

(30) Priority: **30.09.2002 JP 2002284661**

(43) Date of publication of application:
**31.03.2004 Bulletin 2004/14**

(73) Proprietor: **AISIN SEIKI KABUSHIKI KAISHA
Kariya-shi, Aichi-ken (JP)**

(72) Inventors:
• **Kakinami, Toshiaki
Nagoya-shi
Aichi-ken (JP)**

• **Yamamoto, Shuji
Toyota-shi
Aichi-ken (JP)**

(74) Representative: **TBK-Patent
Bavariaring 4-6
80336 München (DE)**

(56) References cited:
**EP-A- 1 005 234        EP-A- 1 065 642
EP-A- 1 094 337        WO-A-01/25054
DE-A- 10 109 680**

Description

FIELD OF THE INVENTION

This invention generally relates to a movable body circumstance monitoring apparatus optimized for monitoring circumstance of a movable body. More particularly, this invention pertains to a movable body circumstance monitoring apparatus capable of detecting an obstacle most closely approaching to the movable body with reference to environment surrounding the movable body. For example, this apparatus is optimum for detecting an obstacle appearing along an expected moving track of a vehicle as the movable body.

BACKGROUND OF THE INVENTION

Conventionally, various suggestions have been supplied about an apparatus for detecting an obstacle existing on an expected moving track of a vehicle. For example, an apparatus has been in practical use, which is provided with an obstacle sensor which transmits ultrasonic and receives reflected wave from the obstacle in accordance with an optical system, a sonar system or the like.

For example, disclosed is an aid system for garaging an automobile in a Japanese Patent Laid-open published as No. 1987-278477 (Patent document 1). The aid system for garaging an automobile includes a computer for calculating an automobile driving track based upon signals outputted from a distance sensor and a steering wheel angle sensor. A distance between the vehicle on an expected driving track and an obstacle around the vehicle is mechanically or electrically scanned by use of an optical distance sensor. When the computer judges that the distance is less than a predetermined distance, a user (mainly the driver) can be auditorily alerted by an alarm.

As another example, disclosed is a rear sight display unit for a vehicle in a Japanese Patent Laid-open published as No. 1989-141137 (Patent document 2). The rear sight display unit for the vehicle includes obstacle detecting sensors set at front left and front right portions of the vehicle for detecting the vehicle front sides approaching to obstacles. Each obstacle detecting sensor detects the approaching in a manner of sonar, infrared optics, contact, or the like. The detected information is displayed with the rear sight in a monitor window at the same time. Therefore, the vehicle backward operation by the driver can be performed without causing the vehicle front left and front right portions to become in contact with the obstacles even if the driver's visual line is not shifted from the monitor window to the vehicle forward.

As a further example, disclosed is a parking support system in a Japanese Patent Laid-open published as No. 2001-187553 (Patent document 3). The parking support system includes a single camera for photographing surroundings of a moving vehicle at first and second points, an imaging unit for converting the surroundings of the moving vehicle into first and second images which are produced in time series, a stereoscopic object-specifying unit for detecting and specifying a stereoscopic object in each image, a vehicle position calculating unit for calculating a vehicle moving data from the first point to the second point, and a stereoscopic object distance calculating unit for calculating a distance between the vehicle and the stereoscopic object based upon the positions of the stereoscopic object in the first and second images and the vehicle moving data. The parking support system including the above structure generates a third image for instructing the driver based upon the images by the imaging unit and the distance between the vehicle and the stereoscopic object calculated by the stereoscopic object distance calculating unit. Therefore, an accurate distance between the vehicle and the stereoscopic object can be calculated in accordance with principles of triangulation modes with the stereoscopic object in the first and second images.

As a still further example, disclosed is a relative position detection device and a parking auxiliary apparatus furnished with the relative position detection device in a Japanese Patent Laid-open published as No. 2002-052999 (Patent document 4). According to the disclosure, an own vehicle stop position marker and a lateral direction gauging marker are superposed and displayed in a monitor window. Therefore, a position of the own vehicle relative to a reference object can be detected by use of the camera image and a general steering wheel angle sensor without using a gauge sensor. In this publication, the own vehicle stop position marker is defined as a marker for stopping the own vehicle in a positional relation that the own vehicle and the reference object are positioned possessing a predetermined orientation. The lateral direction gauging marker is defined as a marker for gauging a lateral distance between the own vehicle and the reference object in response to a vehicle moving amount in the monitor window.

In the meantime, a conventional technique has been widely known in an image processing technical field, which reconstructs a three-dimensional (3D) shape by use of two cameras. For example, a thesis "Solve a Stereophonic mechanism" (Nonpatent document 1) by Koichiro Deguchi in a publication entitled "Information Processing" (date of publication of vol. 37 No. 7: July, 1996) describes gauging a stereoscopic object by a stereo. According to the disclosure in the thesis, a position of each corresponding point in the space can be determined based upon features of the respective images shot by the two cameras (e.g. focal lengths of the two camera lenses, image centers thereof, pixel size thereof, and so on), positions and postures of the two cameras, and a corresponding of the two images.

Likewise, according to a column "Three-dimensional shape reconstruction by a stereo vision" (Nonpatent document 2) at pages 161 and 162 in a publication entitled "Mathematics of Spatial data" (date of publication of the first edition: March 10, 1995, publishing office: Asakura, Inc., author: KANATANI, Kenichi), a stereo vision is defined as a method of calculating a three-dimensional shape of a substance in accordance with principles of triangulation modes based upon a corresponding relation between the images shot by two cameras. The stereo vision is further defined as one of the most fundamental methods of extracting a three-dimensional information from images so as to be used for a robot control.

Further, according to another thesis "Manipulation of Videos" (Nonpatent document 3) by Koichiro Deguchi in the publication entitled "Information Processing" (date of publication of vol. 37 No. 8:August, 1996), a three-dimensional shape of an object in a video can be reconstructed in accordance with the same principles of the aforementioned stereo. Especially, when the video is produced with sequential images, the motion of the object can be tracked. Therefore, the video is considered to be more preferable than only two images in this regard for extracting corresponding points.

However, it seems to be difficult to identify an accurate position of the obstacle because the obstacle sensor in the sonar manner does not possess sufficient distance resolution and directivity. Even when the obstacle is judged to have appeared most closely relative to the vehicle, there may be a case that the obstacle does not actually exist along the vehicle moving track. In this case, the obstacle cannot be considered to be most closely positioned relative to the vehicle. That is, the shortest distance between the movable body and the obstacle appearing along the moving track of the movable body should be subject to be gauged. Further, when the obstacle possesses concave and convex outer surfaces, the shortest distance may not be able to be detected by a beam diameter or direction. Therefore, the aforementioned obstacle sensor has been utilized on the assumption thereof.

For example, the above identified patent document 1 discloses a method of displaying the expected driving track of the vehicle and alerting when the obstacle is detected to exist within the expected driving track. In this case, the optical obstacle sensor is required in addition to a camera, thereby causing cost increase. When a mechanically scanning obstacle sensor is applied as the optical obstacle sensor, scanning response is not as fast as expected. Further, when an electrically scanning obstacle sensor with plural elements being aligned is applied as the optical obstacle sensor, resolution thereof is not as high as expected.

The above identified patent document 2 discloses a method of graphically displaying a positional relationship between an own vehicle and an obstacle with the rear view captured by the camera in the monitor. However, the document does not suggest or imply which substance in the rear view is identified as the obstacle.

As described above, a camera image has been conventionally utilized for detecting a view in a specific direction, and an obstacle detecting sensor has been utilized for detecting the obstacle. The obstacle detecting sensor has been represented by a sensor which transmits light, electric wave, or sonic wave and detects the obstacle with reference to reflected wave. However, recent developments have lead to an apparatus which can detect the positional relationship between the obstacle and the movable body at a further reasonable cost.

For example, the above-described patent document 3 discloses a method of calculating a distance relative to the stereoscopic object which was photographed in tow images. In this case, a distance gauging sensor is not required for calculating the distance from the vehicle to the stereoscopic object. Instead, the stereoscopic object-specifying unit for detecting and specifying the stereoscopic object in the image, the vehicle position calculating unit for calculating the vehicle moving data, and the stereoscopic object distance calculating unit for calculating the distance from the vehicle to the stereoscopic object are required. More particularly, an image A shot while the vehicle is at a position a is converted to an image as if it were shot while the vehicle 1 was at a position b, wherein an image C can be calculated. That is, a distance between the vehicle and the stereoscopic object can be geometrically calculated based upon a deviation between the two images and the vehicle moving data. Accordingly, there may be still other method required to detect the obstacle most closely approaching to the vehicle on the expected moving track. Further, it may remain to be accounted where the aforementioned matter can be solved by use of the stereoscopic object distance calculating unit.

The above-described patent document 4 suggests the relative position detection device capable of detecting the position of the own vehicle relative to the reference object with no use of the distance gauging sensor. More particularly, the vehicle position is detected with use of the own vehicle stop position marker and the lateral direction distance gauging marker on the assumption of the vehicle stationary condition upon parking. Accordingly, there may be still other method required for detecting an obstacle most closely approaching to the vehicle on the expected moving track of the vehicle.

In the meantime, a three-dimensional shape of an obstacle can be restored by use of for example a single camera if the image processing technique disclosed in the nonpatent documents 1, 2, and 3 are applied. The image processing technique can be properly applied for the apparatus for monitoring the circumstance around the movable body such as a vehicle. However, none of the documents disclose the description or suggestion thereof.

EP 1 005 234 A2 shows a movable body circumstance monitoring apparatus according to the preamble of claim 1

A need exists for providing an improved movable body circumstance monitoring apparatus capable of surely detecting an obstacle most closely approaching to a movable body on an expected moving track of the movable body with reference to environment surrounding the movable body without additionally using an obstacle detecting sensor.

SUMMARY OF THE INVENTION

This need is covered by the movable body circumstance monitoring apparatus according to claim 1.

Further developments are set out in the dependent claims.

Herein, the information about the environment surrounding the movable body includes a size, position and so on of a substance around the movable body. The movable body includes a vehicle, a movable robot, and the like.

**BRIEF DESCRIPTION OF THE DRAWING FIGURES**

The foregoing and additional features and characteristics of the present invention will become more apparent from the following detailed description considered with reference to the accompanying drawing figures wherein:

FIG. 1 is a block diagram illustrating a structure of a movable body circumstance monitoring apparatus according to an embodiment of the present invention;

FIG. 2 is a perspective view illustrating a vehicle mounting the movable body circumstance monitoring apparatus as a parking guide system according to the embodiment of the present invention;

FIG. 3 is a block diagram illustrating a structure of the parking guide system according to the embodiment of the present invention;

FIG. 4 is a plan view illustrating a vehicle model according to the embodiment of the present invention;

FIG. 5 is a plan view exemplifying a method of detecting and tracking a positional coordinate of the movable body and a direction thereof after movement thereof with reference to a positional coordinate of the vehicle and the direction thereof at a movement starting position in a predetermined three-dimensional coordinate according to the embodiment of the present invention;

FIG. 6 is a plan view exemplifying a condition specifying positional coordinate and posture of the vehicle in a third-dimensional map according to the embodiment of the present invention;

FIG. 7 is a plan view exemplifying the shortest distance between the obstacle ahead the vehicle and the vehicle moving forward according to the embodiment of the present invention;

FIG. 8 is a plan view exemplifying a condition in which the turning vehicle does not become in contact with the obstacle ahead the vehicle according to the embodiment of the present invention;

FIG. 9 is a plan view exemplifying a condition in which the turning vehicle becomes in contact with the obstacle ahead the vehicle according to the embodiment of the present invention;

FIG. 10 is a plan view enlargedly illustrating the shortest distance between the vehicle and the obstacle in FIG. 9;

FIG. 11 is a view exemplifying the shortest distance between the obstacle and the vehicle at vertically different two positions according to the embodiment of the present invention;

FIG. 12 is a view exemplifying a displayed image of the shortest distance between the obstacle and the vehicle photographed by a camera mounted at a rear portion of the vehicle according to the embodiment of the present invention;

FIG. 13 is a view exemplifying a different displayed image of the shortest distance between the obstacle and the vehicle photographed by the camera mounted at the rear portion of the vehicle;

FIG. 14 is ,a view exemplifying a virtual image including the positional relationship between the vehicle and the obstacle and the shortest distance therebetween;

FIG. 15 is a plan view illustrating a displayed view shot by a virtual camera arranged at a rear portion of the vehicle according to the embodiment of the present invention;

FIG. 16 is a plan view illustrating a displayed view at 180 degrees shot by a virtual camera arranged at an upper rear portion of the vehicle according to the embodiment of the present invention:

FIG. 17 is an explanatory view for explaining a geometric relationship for obtaining a feature point of a substance in the space by two cameras so as to reconstruct a three-dimensional shape according to the embodiment of the present invention;

FIG. 18 is an explanatory view for exemplifying a feature point tracking so as to reconstruct the three-dimensional shape according to the embodiment of the present invention; and

FIG. 19 is an explanatory view for exemplifying a tracking so as to reconstruct the three-dimensional shape according to the embodiment of the present invention.

## DETAILED DESCRIPTION OF THE INVENTION

Preferred embodiment of the present invention will be described hereinbelow in detail with reference to the accompanying drawings.

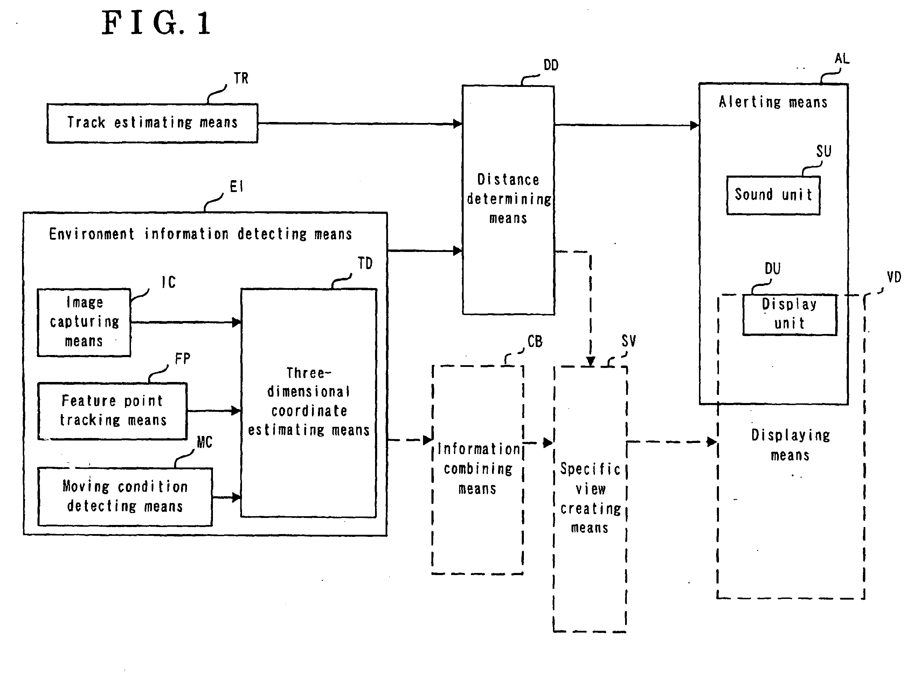

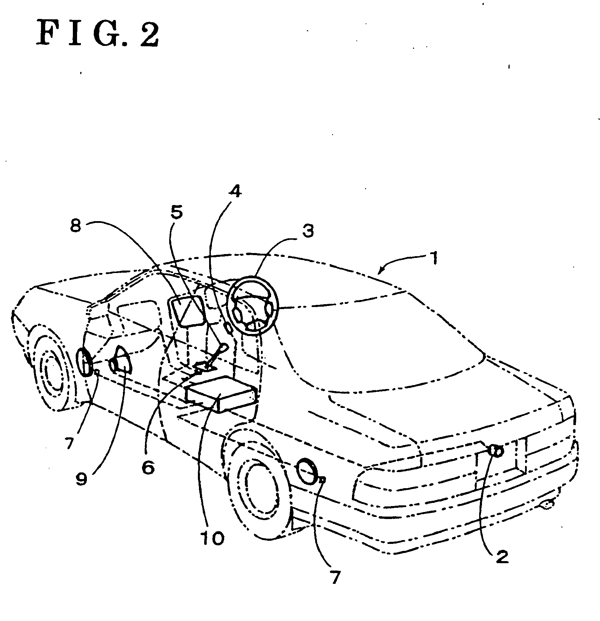

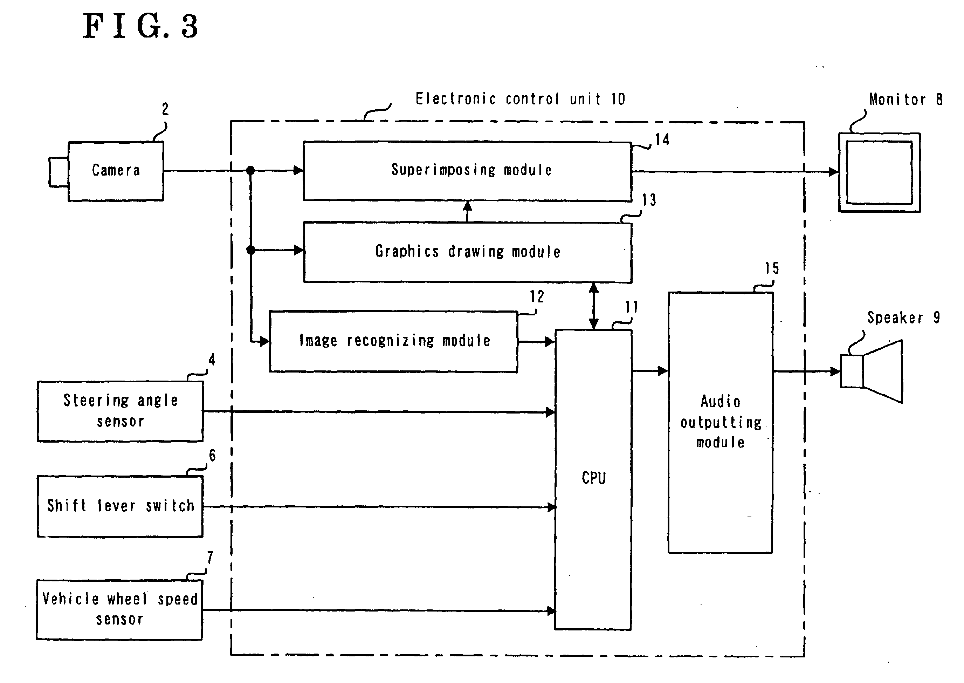

When a movable body circumstance monitoring apparatus according to the embodiment of the present invention is mounted on a vehicle, the apparatus is applied as a parking guide system as illustrated in FIGS. 2 and 3. As illustrated in FIG. 1, the movable body circumstance monitoring apparatus according to the embodiment of the present invention includes environment information detecting means EI, track estimating means TE, distance determining means DD, and alerting means AL. The environment information detecting means EI detects and stores information of environment such as size and position of a substance around the movable body. The track estimating means TE estimates a moving track of the movable body. The distance determining means DD identifies a substance such as an obstacle along the estimated moving track of the movable body and determines the shortest distance between the movable body and the obstacle appearing along the estimated moving track. The moving track estimated by the track estimating means TE is overlapped the information of the environment detected by the environment information detecting means EI prior to the obstacle identification. The alerting means AL alerts a positional relationship between the movable body and the obstacle based upon the result of the distance determining means DD.

As illustrated in FIG. 1, the environment information detecting means EI is provided with image capturing means IC, feature point tracking means FP, moving condition detecting means MC, and three-dimensional coordinate estimating means TD. The image capturing means IC, such as a ccd camera, is provided on the movable body for shooting the environment surrounding the movable body and outputs an image information to the three-dimensional coordinate estimating means TD. More particularly, when the movable body moves from a first state to a second state, the image capturing means IC shoots the surrounding environment at least at the first and second states of the movable body and outputs two images reflecting the surrounding environment at the respective states. The feature point tracking means FP detects a coordinate of a feature point in the image shot at the first state and also a coordinate, which corresponds to the feature point, in the image shot at the second state. The moving condition detecting means MC detects the positions and postures of the movable body at least at the first and second states, respectively. The three-dimensional coordinate estimating means TD estimates a three-dimensional coordinate of the feature point based upon the position and posture of the movable body at the first and second states detected by the moving condition detecting means MC, the coordinate of the feature point in the image shot at the first state, and the coordinate, which corresponds to the feature point, in the image shot at the second state.

As illustrated in FIG. 1, the movable body circumstance monitoring apparatus can be further provided with information combining means CB, specific view creating means SV, and displaying means VD. The information combining means CB corrects the information detected by the environment information detecting means EI in response to the position and posture of the movable body relative to the environment surrounding the movable body upon movement thereof and outputs the corrected information. The specific view creating means SV creates a specific view of the movable body with reference to the information of the environment surrounding the movable body located at a specific position based upon the information outputted from the information combining means CB. The displaying means VD displays the specific view created by the specific view creating means SV as an displayed image. In this case, the positional relationship between the movable body and the obstacle is displayed with the specific view in a monitor mounted on the movable body.

The alerting means AL includes at least either a display unit DU for displaying the positional relationship between the movable body and the obstacle in the monitor or a sound unit SU for auditly transmitting the positional relationship therebetween. When the movable body corresponds to a vehicle, an output from at least either the display unit DU or the sound unit SU is adjusted in response to the shortest distance between the vehicle and the obstacle on the moving track estimated by the distance determining means DD. For example, a bar graph of the display unit DU goes up or down depending on the length of the distance, and loudness of an alerting sound is increased or decreased depending thereon. The display unit DU identifies a portion of the obstacle which is closest relative to the movable body along the estimated moving track, i.e. which possesses the closest impact point relative to the movable body along the estimated moving track, and displays the portion in the monitor: For example, the portion in the monitor can be marked.

Further, the specific view creating means SV can create the specific view including the obstacle most closely approaching to the movable body based upon the information detected by the distance determining means DD. For example, a , virtual image of a view containing the obstacle at the closest distance relative to the movable body can be automatically displayed. Further, the portion of the obstacle which is the closest relative to the movable body can be marked in the monitor.

Following description will be given for describing the parking guide system illustrated in FIGS. 2 and 3 when the movable body corresponds to the vehicle.

A camera 2 (e.g. a ccd camera) corresponding to the image capturing means IC is mounted on a rear portion of the vehicle 1 as a non-limiting example for photographing an image of the environment around the movable body. Information of the image is supplied to an electronic control unit 10. As illustrated in FIG. 2, the electronic control unit 10 housed in a container mounted on the vehicle 1 and acts as the moving condition detecting means MC, the three-dimensional coordinate estimating means TD, the information combining means CB, the specific view creating means SV, the track estimating means TE, and the distance determining means DD. The steering angle sensor 4 configuring a portion of the track estimating means TE is disposed in the vehicle 1 so as to detect a steering angle of a steering wheel 3. A shift lever switch 6 is disposed in the vehicle 1, which is turned on when a shift lever 5 is shifted to a reverse stage. The detected steering angle and the on signal are then provided to the electronic control unit 10, respectively.

Further, according to the embodiment of the present invention, vehicle wheel speed sensors 7 are mounted on respective vehicle wheels so as to detect rotational speed of the respective corresponding vehicle wheels. The detected vehicle wheel speed is supplied to the electronic control unit 10.

Accordingly, a moving distance of the movable body at least between a first position and a second position can be gauged based upon the detection result of the vehicle wheel speed sensors 7. A monitor 8 is arranged at a predetermined position in the vehicle 1 and should be easily visible by the driver. The monitor 8 displays visual information for parking guiding in response to output signals from the electronic control unit 10. That is, according to the embodiments of the present invention, the monitor 8 acts as the displaying means VD explained in FIGS. 1 through 4. Further, a speaker 9 is disposed at a predetermined position in the vehicle 1, thereby enabling to output audio information for parking guiding in response to an output signal from the electronic control unit 10.

With reference to FIG. 3, the steering angle sensor 4, the shift lever switch 6, and the vehicle wheel speed sensors 7 are connected to a CPU 11 in the electronic control unit 10 via an input interface (not shown). The monitor 8 is connected to a superimposing module 14 in the electronic control unit 10 via an output interface (not shown). The speaker 9 is connected to the CPU 11 via an audio outputting module 15. The camera 2 is connected to an image recognizing module 12, a graphics drawing module 13, and the superimposing module 14 via the input interface. The CPU 11, the image recognizing module 12, the graphics drawing module 13, a superimposing module 14, and an audio outputting module 15 are connected by bus bars, respectively. Information in each module is stored for a predetermined period of time and can be read out when needed.

The information of the image of the environment surrounding the vehicle 1 shot by the camera 2 is supplied to the CPU 11 for calculation via the image recognizing module 12. The signal outputted from the vehicle wheel seed sensors 7 and so on are also supplied to the CPU 11 for the calculation. The graphics drawing module 13 draws a three-dimensional graphics in response to a synchronization signal extracted from the image shot by the camera 2 based upon the calculated result. In the meantime, calculation is performed by the CPU 11 for the purpose of the parking assistance. A graphics based upon the calculation result is drawn by the graphics drawing module 13. The graphics drawn by the graphics drawing module 13 and the image shot by the camera 2 are superposed by the superposing module 14 when needed and are displayed in the window screen of the monitor 8. In this case, it is possible to display an image containing only the graphics in the window screen of the monitor 8. As described above, the three-dimensional coordinate estimating means TD, the distance determining means DD, the information combining means CB, and the specific view creating means SV are configured with the CPU 11, the image recognizing module 12, and the graphics drawing module 13.

As described above, when the vehicle 1 is moved from the first state to the second state, the feature point tracking means FP detects the coordinate of the feature point in the image shot at the first state by the camera 2 and also detects the coordinate, which corresponds to the feature point, in the image shot at the second state by the camera 2. The moving condition detecting means MC detects the positions and postures of the movable body at least at the first and second states, respectively. In the foregoing manner, the three-dimensional coordinate estimating means TD reconstructs a three-dimensional shape based upon the positions and postures of the movable body at the first and second states, the coordinate of the feature point in the image shot at the first state by the camera 2, and the coordinate, which corresponds to the feature point, in the image shot at the second state by the camera 2, wherein a three-dimensional coordinate of the feature point can be obtained.

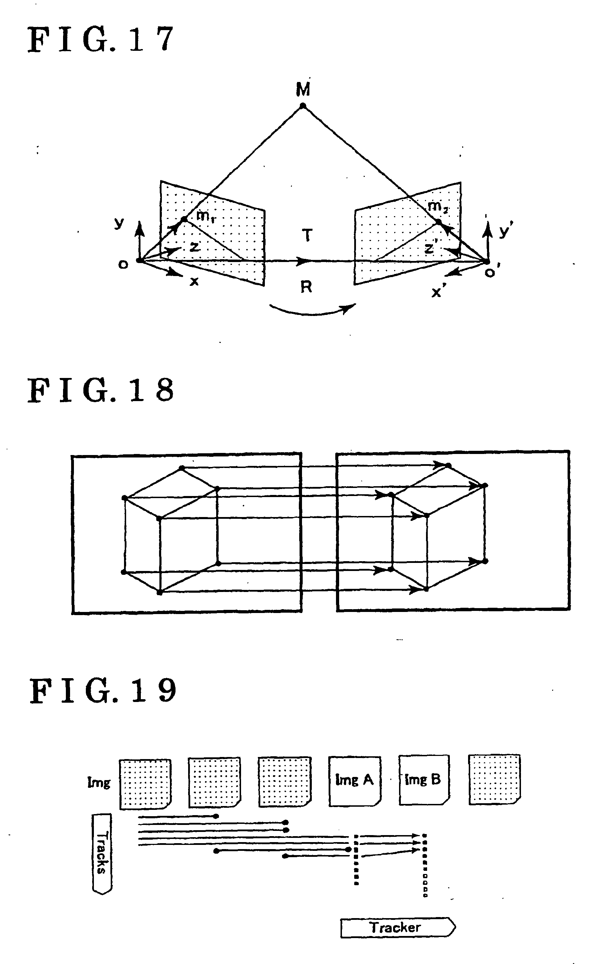

The above-described reconstruction of the three-dimensional shape is carried out based upon the principles of triangulation by use of images as disclosed for example in the aforementioned nonpatent document 2 and are described hereinafter with reference to FIGS. 17 through 19. As illustrated in FIG. 17, when observing an identical point M in the space at least from two camera positions, as shown as o and o' on the left and right sides in FIG. 24, light rays in the air connecting the optical center of the camera and points $m_1$ and $m_2$ observed in the images shot by the respective cameras can be determined. An intersecting point of both light rays represents the point M in the space. In this case, the three-dimensional point M in a scene of interest needs to be identified between the images.

In the meantime, when the three-dimensional shape is reconstructed by use of a single camera, it is necessary to extract the feature points of an object of interest in the images and to track those feature points. Further, it is one of the conditions for reconstructing the three-dimensional shape that internal parameters (e.g. a scale factor, and an optical axis position coordinate) of the camera, and external parameters (e.g. position and posture with respect to the camera of the vehicle) are required to be well known and to have been calibrated in advance.

In order to restore the three-dimensional shape depending on the shift of the scene of interest, a corresponding stereo can be applied to determine at which position and posture of the camera each time-serial image was photographed, as far as the correspondences have been calibrated by a dead-reckoning system. However, it is necessary to identify the corresponding points in the time-serial images which are shot by the camera so as to contain the identical points, thereby enabling to reconstruct the three-dimensional shape in the scene of interest.

Detection of the feature point in the scene of interest can be carried out by detecting some feature points which characterize the object in the scene of interest. The feature points in this case correspond to points possessing appropriate characteristics which are traceable along with the processing sequence of the image. An automatic correlation shown as formula 1 discussed below can be applied for detecting the feature points. A matrix A functions to average derivatives of the image signal included in a window region W containing a point p(x, y) in the image. Thus, an optimal feature point can be obtained by using the matrix A. That is, the feature point suitable for the tracking generally corresponds to a corner and an intersecting point of lines (e.g., a block dot at a corner of the left side of the drawing in FIG.18) and the matrix A detects this sort of feature point. According to formula 1 below, I(x, y) shows a function of the image, $I_x$ shows a gradient of the image relative to an x-axis, $I_y$ shows a gradient of the image relative to a y-axis, and $(x_k, y_k)$ shows an image point in the window W having (x, y) as a centre of the image.

$$A(x,y)=\begin{bmatrix} \sum_W (I_x(x_k,y_k))^2 & \sum_W (I_x(x_k,y_k)I_y(x_k,y_k)) \\ \sum_W (I_x(x_k,y_k)I_y(x_k,y_k)) & \sum_W (I_y(x_k,y_k))^2 \end{bmatrix}.$$

An Image sequence I (u, t) having a coordinate of an image point at $u=[x, y]^T$ is considered for feature tracking. Presuming that the brightness of the image does not change after elapsing a minute time when a sample cycle is sufficiently short, formula 2 is obtained.

[Formula 2]

$$I(\mathbf{u},t) = I\big(\delta(\mathbf{u}),t+\tau\big)$$

With the formula 2, δ(u) represents a motion field (i.e., projection of a three-dimensional motion vector to the image). Because the sample cycle is sufficiently short, as shown in a formula 3, the motion or the shift of the image can be approximated using only a translation element out of the motion elements including a rotation element and the translation element. "d" in the formula 3 represents a displacement vector.

[Formula 3]

$$\delta(u) = u + d$$

In order to calculate the corresponding displacement vector d relative to each selected feature point and each tracked pair of points in the image sequence, a tracker is applied. In practice, because the motion model of the image cannot be recovered perfectly due to the influence of the noise, the above formula 2 does not function sufficiently. Accordingly, as shown in formula 4, the displacement vector d may be calculated by a sum of square difference. The displacement vector d, which minimizes a residual of the formula 4, is obtained and the feature points are tracked in the direction of the displacement vector d as illustrated in FIG. 18. "W" of the formula 4 represents a window for detecting the feature points with reference to the point u.

$$\varepsilon = \sum_W \left[ I(\mathbf{u} + \mathbf{d}, t + \tau) - I(\mathbf{u}, t) \right]^2$$

As illustrated in FIG. 19, a tracks is a set of points characterising an identical object among the image sequences. Image points of each track correspond to projections of respective three-dimensional points. Although the tracks of an image sequence should not be lost, the tracking has to be stopped when the tracking points cannot be detected because the points to be tracked are out of the image or are hidden, or due to noise. Hereinafter, starting from a set of the feature points detected in a first image, the feature points of the previous image, i.e., Img A in Fig. 19, are tracked in the next image, i.e., Img B in Fig. 19. In case that some of the feature points in the Img A is not tracked in the Img B, new feature points are searched in the Img B and the new feature points are referred to as starting points for the tracking thereafter.

When a distance between the position M and the camera position in the three-dimensional space is z, formula 5 is obtained with the projection at a position m in the image. With the formula 5, a distance f is referred to as a focal length. Hereinafter, the distance f is defined with a unit length at 1 so as to simplify the formula 5. In the foregoing manner, a geometric relation for shooting the feature point in the space, such as a peak point of an object, by use of two cameras can be described as illustrated in FIG. 17.

[Formula 5]

$$M = \frac{Z}{f} m \qquad\qquad M = Zm$$

As illustrated in FIG. 17, the second camera coordinate system can be produced by giving rotation matrix R and translation vector T to the first camera coordinate system with a central focus on the original viewpoint o. The translation vector T is referred to as a baseline vector. The parameters {T, R} depict a relative positional and postural relationship between these two camera viewpoints. Therefore, when the object is photographed by a single camera, the camera movement such as translation and rotation can be measured by the dead reckoning system.

Further, as illustrated in FIG. 17, the projections of the position M in the three-dimensional space are assumed to be positioned at the coordinates $m_1$ and $m_2$ in each image. The direction of the feature point from the viewpoint o' of the second camera coordinate system is depicted with a vector $m_2$ with respect to the second camera coordinate. However, the second camera coordinate was produced by giving rotation matrix R to the first camera coordinate system. Therefore, the direction of the feature point from the viewpoint o' is depicted with $Rm_2$ with respect to the first camera coordinate system, wherein formula 6 is obtained.

[Formula 6]

$$Zm_1 = T + Z'Rm_2$$

The aforementioned distances Z and Z' are calculated in accordance with a formula 7.

[Formula 7]

$$Z = \frac{(\mathbf{T} \times \mathbf{Rm_2}, \mathbf{m} \times \mathbf{Rm_2})}{\|\mathbf{m_1} \times \mathbf{Rm_2}\|^2}, \qquad\qquad Z' = \frac{(\mathbf{T} \times \mathbf{m_1}, \mathbf{m_1} \times \mathbf{Rm_2})}{\|\mathbf{m_1} \times \mathbf{Rm_2}\|^2}$$

As described above, the distances Z and Z' in the three-dimensional space can be restored depending on the coordinates $m_1$ and $m_2$ of the projections onto the respective images from the two different camera viewpoints. The aforementioned track is the set of points in the objective view. Therefore, the three-dimensional shape can be restored based upon the calculation in accordance with the formula 7 regarding all tracks.

As shown in FIG. 1, the dead reckoning system as the moving condition detecting means MC for detecting the moving state of the vehicle can be configured with at least one sensor for detecting the vehicle dynamic state such as the vehicle running speed, the steering condition, the vehicle turning condition and the like. According to the embodiments of the present invention, the dead reckoning system can be configured with the vehicle wheel speed sensor 7 and can be applied as the movable body information detecting means MB. In the foregoing manner, the object existing in the imaged region can be specified based upon the vehicle positions and postures at the first and second conditions, and the corresponding points identified between the specified images by extracting and tracking the feature points in the images shot by the camera 2 at the first and second conditions, wherein the three-dimensional coordinate in the imaged region can be estimated.

According to the embodiment of the present invention, the dead-reckoning system is constructed for detecting the vehicle state, i.e. the position and the direction (i.e., angle about the vertical axis) of the vehicle 1, based on the wheel speed signals detected by the vehicle wheel speed sensors 7. The movable body information detecting means MB is configured with the dead reckoning system.

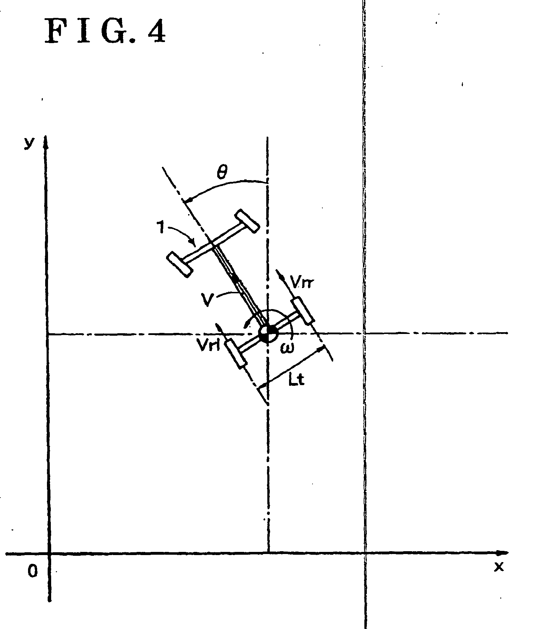

Next, the following description will be given for explaining a method of detecting the condition of the vehicle 1 according to the embodiments of the present invention. As illustrated in FIG. 4, the position and the direction of the vehicle 1 may be defined with three variables $(x, y, \theta)$. When the vehicle speed is defined as a vehicle speed V and the angular velocity of the vehicle 1 is defined as an angular velocity $\omega$, the following formula is established between the vehicle state, the vehicle speed, and the angular velocity. That is:

$$dx/dt = V \cdot \cos\theta,$$

$$dy/dt = V \cdot \sin\theta,$$

and

$$d\theta/dt = \omega.$$

Although the vehicle speed V and the angular velocity $\omega$ cannot be directly measured, these values can be determined using the wheel speed of the rear wheels on the right and left detected by the wheel speed sensors as follows. That is:

$$V = (Vrr + Vrl) / 2,$$

and

$$\omega = (Vrr - Vrl) / Lt,$$

wherein Vrr stands for the wheel speed of the rear right wheel and Vrl stands for the wheel speed of the rear left wheel, and Lt stands for a tread length of the vehicle.

According to the foregoing formulas, the vehicle state $(x, y, \theta)$ at a time t can be shown in the following manner when an initial value $(x_0, y_0, \theta_0)$ when t equals to zero is determined.

$$x = x_0 + \int (dx/dt)dt$$

wherein $\int$ is varied from t equal to zero to t equal to t ,(i.e., t =0 $\rightarrow$ t=t)

$$y = y_0 + \int (dy/dt)dt$$

wherein $\int$ is varied from t equal to zero to t equal to t (i.e., t =0 $\rightarrow$ t=t)

$$\theta = \theta_0 + \int (d\theta/dt)dt$$

wherein $\int$ is varied from t equal to zero to t equal to t (i.e., t =0 $\rightarrow$ t=t)

That is, the vehicle state (x, y, $\theta$) will be determined as shown in a formula 8.

**[Formula 8]**

$$x = x_0 + \int_{t=0}^{t} \dot{x}dt$$

$$y = y_0 + \int_{t=0}^{t} \dot{y}dt$$

$$\theta = \theta_0 + \int_{t=0}^{t} \dot{\theta}dt$$

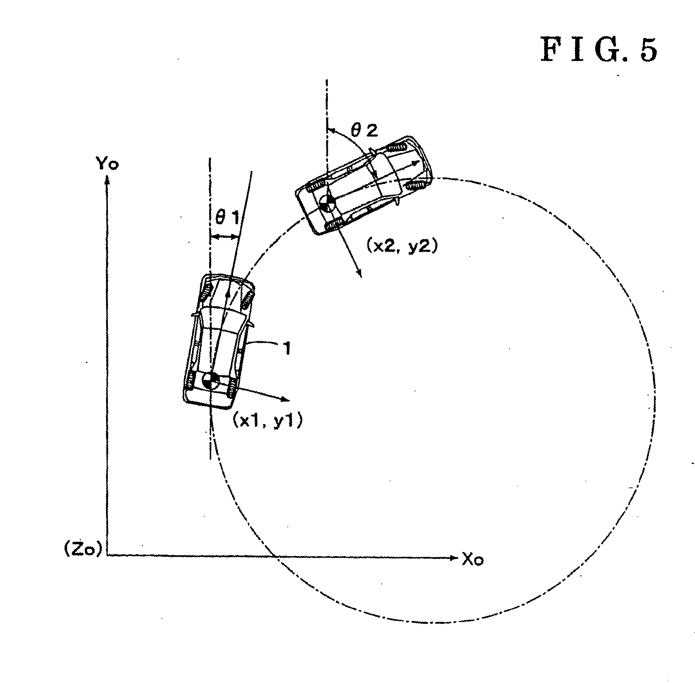

FIG. 5 shows the condition of the vehicle performing a turning movement on $X_0$-$Y_0$ plane (i.e., $Z_0$=0) in the three-dimensional coordinates ($X_0$, $Y_0$, $Z_0$). The positional relationship from a first vehicle condition determined by a first position (i.e., coordinates ($x_1$, $y_1$)) and a first direction (i.e., angle $\theta_1$) to a second vehicle condition determined by a second position (i.e., coordinates ($x_2$, $y_2$)) and a second direction (i.e., angle $\theta_2$) can thus be determined. Although the vehicle position (i.e., coordinates) and the direction (i.e., angle) are detected based on the detected wheel speed by the wheel speed sensors 7 for the rear wheels on the right and left, the position and direction of the vehicle 1 may be determined by use of the steering angle sensor 4, a yaw rate sensor (not shown), a distance sensor (not shown), or combinations of those. Although FIG. 5 shows the plain circle turning movement of the vehicle 1, the vehicle movement can be tracked in accordance with combination of plural arcs or direct lines based upon the above-described coordinates and directions of the vehicle 1.

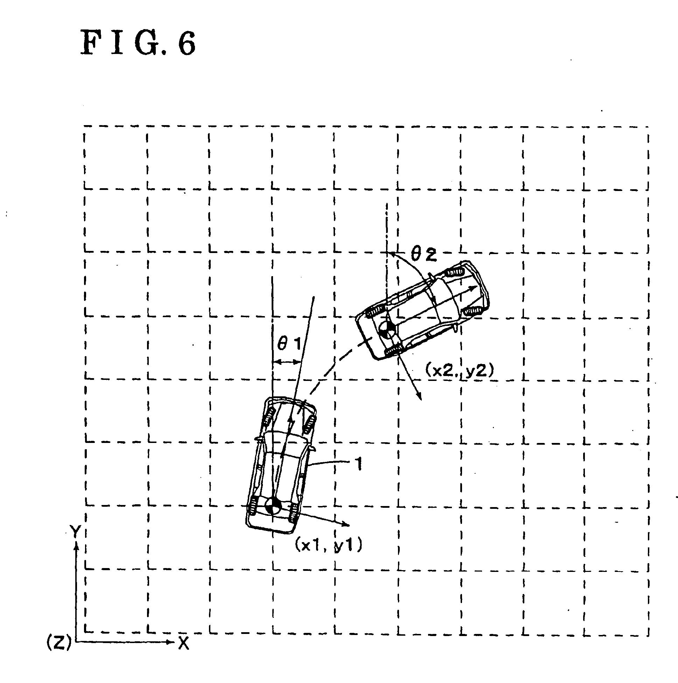

Meanwhile, as illustrated in FIG. 6, the three-dimensional environment estimated by the three-dimensional coordinate estimating means TD is stored in a memory as a three-dimensional map denoted with broken lines with reference to the three-dimensional coordinates (X, Y, Z). There are the other vehicles which are not the own vehicle and shot by the camera 2, the obstacles, the buildings which are shot by the camera 2, and the like in the three-dimensional map. However, their illustrations will be omitted. The three-dimensional coordinate illustrated in FIG. 5 is corresponded to the three-dimensional map. That is, the vehicle 1 illustrated in FIG. 5 is arranged in the three-dimensional map illustrated in FIG. 6, wherein the position (coordinate) and posture, i.e. direction (angle) of the vehicle 1 are identified in the three-dimensional map illustrated in FIG. 6.

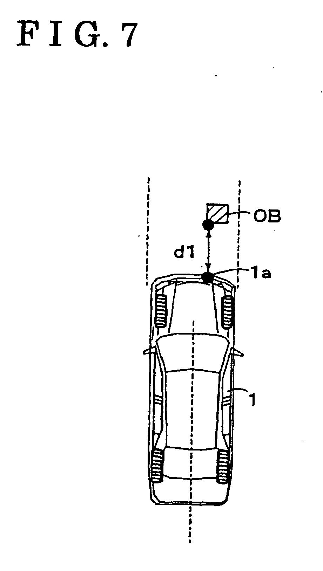

As described above, the positional relationship between the vehicle 1 and the obstacle in the three-dimensional coordinate becomes clear with reference to the position and posture of the vehicle 1 in the three-dimensional coordinate map. For example, as illustrated in FIG. 7, if an obstacle OB exists ahead the vehicle 1 moving forward with the steering wheel 3 at a neutral position as being illustrated in FIG. 2, a bumper portion 1a of the vehicle 1 may impact or become in contact with a left corner portion of the obstacle OB. In this case, a distance d1 between the left corner portion of the obstacle OB and the bumper portion 1a of the vehicle 1 is estimated as the shortest distance along the estimated moving track.

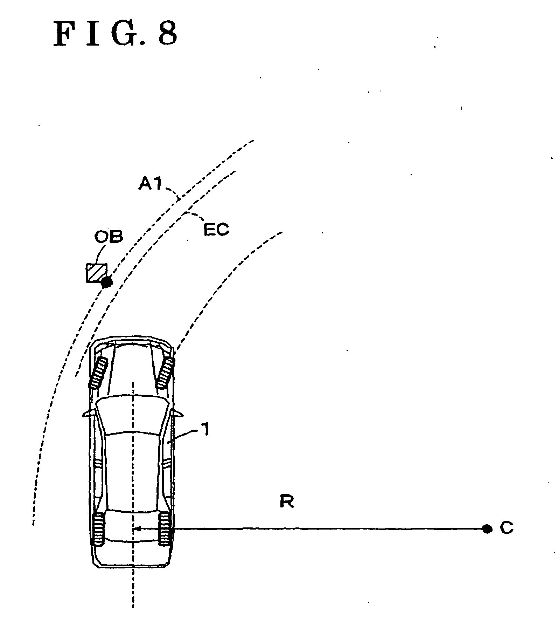

In the meantime, when the vehicle 1 is turning at a turning radius R with a turning centre C as illustrated in FIG. 8 in response to operation of the steering wheel 3, it may be easily estimated based upon the positional relationship illustrated in FIG. 8 that any arcs generated at'any portions of the obstacle OB about the turning centre C does not overlap the vehicle 1. Therefore, any portions of the obstacle OB for example ahead the vehicle 1 does not impact or become in contact with the vehicle 1 turning in the aforementioned condition. An arc A1 represents the arc of the obstacle OB with the smallest radius. The turning centre C is located as an extension of a rear wheel axis of the vehicle 1 and the position thereof is determined depending on the steering angle of the steering wheel 3.

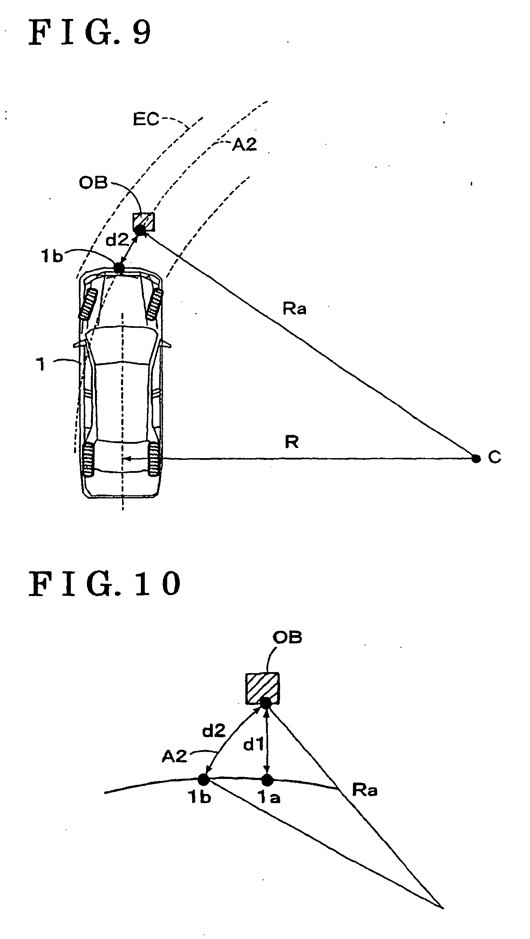

As illustrated in FIG. 9, when the vehicle 1 turns at the radius R with the turning centre C and the obstacle OB ahead the vehicle 1 relatively moves along an arc A2 at a radius R1 with the turning centre C, the arc A2 overlaps the vehicle 1, wherein the obstacle OB may impact or become in contact with a bumper portion 1b of the vehicle 1 turning in the aforementioned condition. In this case, a distance d2 between the impact portion of the obstacle OB and the bumper portion 1b is estimated as the shortest distance on the estimated moving track.

As described above, when the arc passing through the obstacle OB with the turning centre C substantially corresponds to the arc passing through the vehicle 1 with the turning centre C, the vehicle 1 is estimated to become in contact with the obstacle OB. Therefore, as illustrated in FIG. 10, the distance between the bumper portion 1b and the obstacle OB is estimated as the shortest distance d2. The shortest distance d2 is greater than the straight distance d1 between the bumper portion 1a and the obstacle OB. The shortest distance d2 can be calculated by the CPU 11.

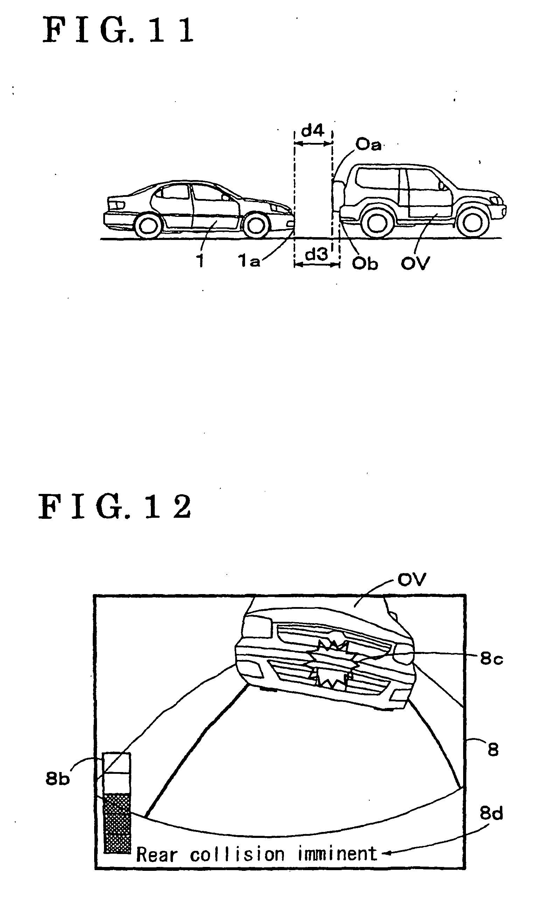

The above description was given with reference to a two-dimensional flat surface X-Y illustrated in FIGS. 7 through 10 for simplifying the description. However, according to the embodiment of the present invention, the positional relationship between the vehicle 1 and the obstacle in the three-dimensional coordinate, wherein the shortest distance is gauged in consideration of the condition in a Z axial direction. For example, as illustrated in FIG. 11, a distance d3 represents a horizontal distance between the bumper portion 1a of the vehicle 1 and a bumper portion Ob of the other vehicle OV as the obstacle. A distance d4 represents a horizontal distance between the bumper portion 1a of the vehicle 1 and a rear end portion Oa of the other vehicle OV. The distance d4 is shorter than the distance d3. When the distance between the vehicle bumper portion 1a and the other vehicle OV is assumed as the distance d3, the front upper portion of the vehicle 1 may become in contact with the rear end portion Oa at the distance d4. According to the embodiment of the present invention, the above-described problem can be effectively prevented.

Next, following description will be given for expressing the alerting means AL acting based upon the shortest distance between the vehicle 1 and the obstacle OB (i.e. the other vehicle OV) gauged above.

The monitor 8 configuring the display unit DU displays the image captured by the camera 2. According to the embodiment of the present invention, as illustrated in FIG. 12, the shortest distance between the vehicle 1 and the obstacle OB (i.e. the other vehicle OV) is explained by use of a bar graph 8b in the monitor 8. The bar graph 8b goes up and down in response to the distance. When the shortest distance becomes smaller, i.e. when the vehicle 1 approaches closer to the obstacle OB, a shadowed portion of the bar graph 8b becomes reduced. Further, the shortest distance can be explained by use of a distance scale of the bar graph 8b. Still further, the shortest distance can be explained by directly with a mileage indicator instead of the bar graph 8b.

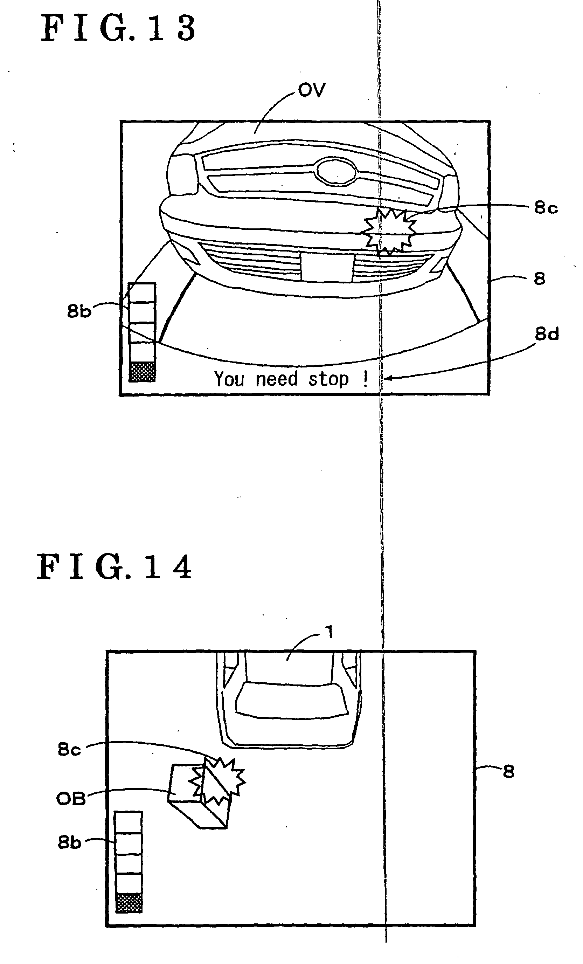

Further, as illustrated in FIGS. 12 and 13, a maker 8c can be displayed in the image of the monitor 8, which specifies a portion subject to be referred to for gauging the shortest distance, i.e. which specifies a portion which may soon become in contact with the vehicle 1 maintained under the present condition thereof. Sill further, a notice 8d can be displayed in the image of the monitor 8. Further, the user or the driver can be auditorily warned by a voice or a beep sound from the sound unit SU depending on the shortest distance. The user can be warned only by a single above-describe alerting means or by plural combinations thereof.

Further, the user can be alerted by use of the virtual image as illustrated in FIG. 14. FIG. 14 illustrates a portion of the own vehicle 1, a graphic figure expressing the obstacle OB, the bar graph 8b, and the marker 8c. Therefore, the relationship between the vehicle 1 and the obstacle 8 can be identified. The notice 8d, the voice or the beep sound described above can be applied along therewith. The virtual image can be can be created by the specific view creating means SV and the like as illustrated in FIG. 1 and is described in more detail hereinbelow.

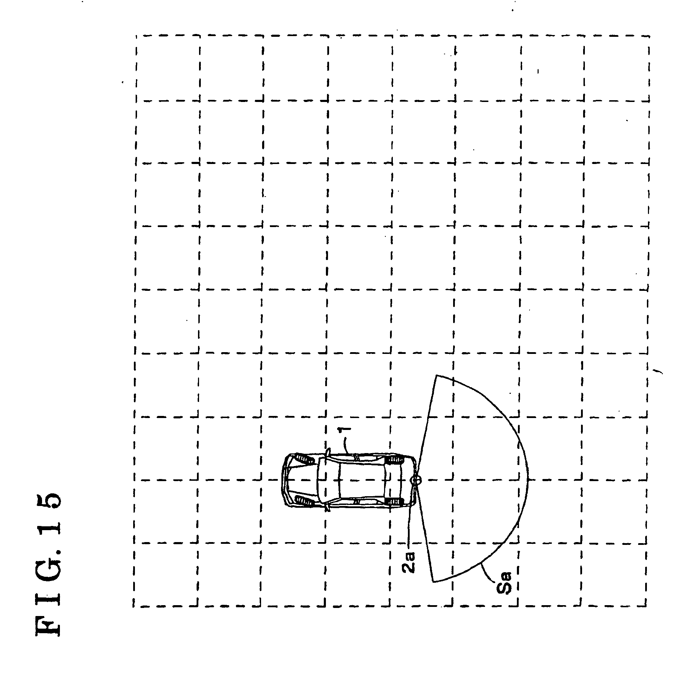

The specified view is created by the specified view creating means SV when a camera is assumed to have been oriented in a predetermined direction on the vehicle 1 positioned at a predetermined point in the third-dimensional environment containing the environment around the vehicle 1. An image of the view shot by this virtual camera is displayed in the monitor 8 as the displaying means VD. FIG. 15 shows which region is contained in a view shot by the virtual camera 2a in accordance with the third-dimensional map with the vehicle 1 after moving when the virtual camera 2a is assumed to have been mounted at a rear portion of the vehicle 1 as a non-limiting example. In other words, a region denoted with Sa in FIG. 15 is contained in the view shot by the virtual camera 2a and is displayed as a virtual image in the monitor 8. The above description can be applied also for the virtual camera which is assumed to have mounted at a front or side portion of the vehicle 1. Hereinafter, the region displayed in the monitor 8 is referred to as a displayed view.

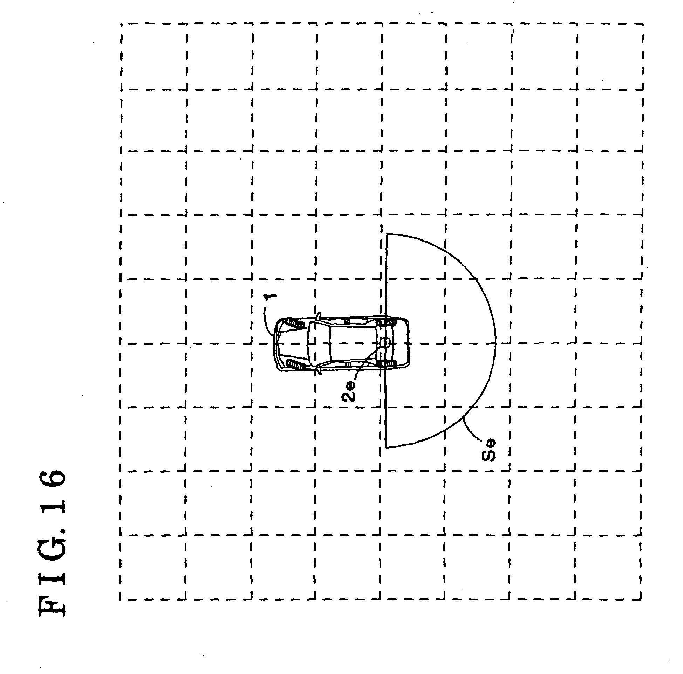

The angle photographed by the camera illustrated in FIG. 15 is designed to be substantially similar to the angle shot by the actual camera 2. Alternatively, as illustrated in FIG. 16, a virtual camera 2e can be mounted on the vehicle 1 so as to set a displayed view Se at 180 degrees. Therefore, the monitor 8 can display a virtual image which also contains views that can not be shot by the actual camera 2. A virtual camera can be mounted about the vehicle 1 so as to set a displayed view at 360 degrees, which is not illustrated. In this case, the virtual image includes the view shot by the virtual camera with the displayed view at 360 degrees. There are the other vehicles which are not the own vehicle and shot by the camera 2, the obstacles, the buildings which are shot by the camera 2, and the like in the three-dimensional map illustrated in FIGS. 15 and 16. However, their illustrations will be omitted.

The virtual image created as described above varies in response to the movement of the virtual camera 2, i.e. in response to the movement of the vehicle 1. According to the embodiment of the present invention, the virtual image including the obstacle shot during the vehicle movement can be displayed in response to the conditions, even after the vehicle movement. For example, with reference to the virtual image in FIG. 14, the information of the environment shot by the camera 2 upon the vehicle rearward movement after the forward movement thereof has been stored in the memory as the three-dimensional map. Therefore, the position (coordinate) and posture (direction) of the vehicle 1 can be specified in the three-dimensional coordinate map. When the distance between the vehicle 1 and the obstacle OB in the three-dimensional coordinate map is judged to be less than a predetermined distance, the virtual image of FIG. 14 is automatically displayed in the monitor 8. Alternatively, the screen of the monitor 8 can be switched to the virtual image in response to the instruction by the user (especially by the driver).

FIGS. 12 through 16 are applied for the embodiment of the vehicle 1 which is provided with the camera 2 at a rear portion thereof such as a trunk lid portion as a non-limiting example. FIGS. 7 through 11 are applied for the embodiment of the vehicle 1 which is provided with the camera 2 at a front portion thereof such as a bumper portion as a non-limiting example. Therefore, the present invention can be effectively applied for detecting the obstacle OB which appears ahead of the vehicle 1 or behind thereof. Further, according to the embodiment of the present invention, the three-dimensional coordinate map is created only by use of the single camera 2. Alternatively, the three-dimensional coordinate map can be created by use of plural cameras.

A movable body circumstance monitoring apparatus includes environment information detecting means for detecting and storing information about environment surrounding a movable body, track estimating means for estimating a moving track of the movable body, distance determining means for identifying a substance appearing along the estimated moving track of the movable body and for determining a distance between a portion of the movable body and a portion of the substance, alerting means for alerting a positional relationship between the movable body and the substance based upon the result determined by distance determining means. The distance between the portion of the movable body and the portion of the substance appearing along the estimated moving track of the movable body is the shortest distance between the movable body and the substance.

## Claims

1. A movable body circumstance monitoring apparatus **characterized in that** the apparatus comprises:

   environment information detecting means (EI) for detecting and storing information about environment surrounding a movable body; and
   track estimating means (TE) for estimating a moving track of the movable body,
   **characterized by**
   distance determining means (DD) for identifying a substance appearing along the estimated moving track of the movable body and for determining the shortest distance extending along the estimated moving track of the movable body between a portion of the movable body and a portion of the substance which contact one another when the movable body moves along the estimated moving track of the movable body ; and
   alerting means (AL) for alerting a positional relationship between the movable body and the substance based upon the result determined by the distance determining means (DD).

2. A movable body circumstance monitoring apparatus according to claim 1, wherein the distance determining means (DD) overlaps the moving track of the movable body estimated by the track estimating means (TE) on the information of the environment detected by the environment information detecting means (EI) prior to the substance identification and the distance determination by the distance determining means (DD).

3. A movable body circumstance monitoring apparatus according to any preceding claim, wherein the environment information detecting means (EI) includes:

   at least one image capturing means (IC) mounted on the movable body for obtaining an image of the surrounding of the movable body and for outputting the image information, the image capturing means (IC) obtaining a first image at least at a first state of the movable body and obtaining a second image at least at a second state thereof when the movable body move from the first state to the second state;

feature point tracking means (FP) for detecting a coordinate of a feature point in the first image at the first state of the movable body and for detecting a coordinate, which corresponds to the feature point, in the second image at the second state thereof,

moving condition detecting means (MC) for detecting position and posture of the movable body at least at the first and second states; and

three-dimensional coordinate estimating means (TD) for estimating a three-dimensional coordinate of the feature point based upon the position and posture of the movable body at the first and second states detected by the moving condition detecting means (MC), the coordinate of the feature point in the first image at the first state of the movable body, and the coordinate, which corresponds to the feature point, in the second image at the second state.

4. A movable body circumstance monitoring apparatus according to any preceding claim **characterized in that** the apparatus further comprises:

information combining means (CB) for correcting the information detected by the environment information detecting means (EI) in response to a positional and postural relationship of the movable body relative to the environment surrounding the movable body on a occasion when the movable body moves and for outputting the corrected information;

specific view creating means (SV) for creating a specific view of the movable body with reference to information of environment surrounding the movable body at a specific position based upon the information outputted from the information combining means (CB); and

displaying means (VD) for displaying the specific view created by the specific view creating means (SV) as an image,

wherein the displaying means (VD) displays the positional relationship of the movable body relative to the substance along with the specific view as the image in a monitor mounted on the movable body.

5. A movable body circumstance monitoring apparatus according to claim 3 or 4, wherein the track estimating means (TE) estimates the moving track of the movable body based upon the detection by the moving condition detecting means (MC).

6. A movable body circumstance monitoring apparatus according to any preceding claim, wherein the alerting means (AL) includes at least either a display unit (DU) for displaying the positional relationship between the movable body and the substance as the image in the monitor mounted on the movable body or a sound unit (SU) for auditorially transmitting the positional relationship between the movable body and the substance.

7. A movable body circumstance monitoring apparatus according to claim 6, wherein the alerting means (AL) adjusts at least output from the display unit (DU) or the sound unit (SU) in response the distance between a portion of a vehicle and the portion of the substance appearing along the moving track estimated by the distance determining means (DD) when the movable body corresponds to the vehicle.

8. A movable body circumstance monitoring apparatus according to claim 6, wherein the display unit (DU) specifies the portion of the substance which is closest to the portion of the movable body along the estimated moving track of the movable body.

**Patentansprüche**

1. Zustandsüberwachungsvorrichtung eines beweglichen Körpers, **gekennzeichnet durch**:

eine Umgebungsinformationserfassungseinrichtung **(EI)** zum Erfassen und Speichern von Informationen über eine Umgebung, die einen beweglichen Körper umgibt; und

eine Wegabschätzeinrichtung **(TE)** zum Abschätzen eines Bewegungsweges des beweglichen Körpers, **gekennzeichnet durch**

eine Distanzbestimmungseinrichtung **(DD)** zum Identifizieren eines Gegenstands, der entlang des abgeschätzten Bewegungsweges des beweglichen Körpers auftritt, und zum Bestimmen der kürzesten Distanz entlang des abgeschätzten Bewegungsweges des beweglichen Körpers zwischen einem Abschnitt des beweglichen Körpers und einem Abschnitt des Gegenstands, die einander berühren, wenn sich der bewegliche Körper entlang des abgeschätzten Bewegungswegs des beweglichen Körpers bewegt; und

eine Hinweiseinrichtung **(AL)** zum Hinweisen auf eine Positionsbeziehung zwischen dem beweglichen Körper und dem Gegenstand basierend auf dem **durch** die Distanzbestimmungseinrichtung **(DD)** erfassten Ergebnis.

2. Zustandsüberwachungsvorrichtung eines beweglichen Körpers gemäß Anspruch 1, wobei die Distanzbestimmungseinrichtung **(DD)** den durch die Wegabschätzeinrichtung **(TE)** abgeschätzten Bewegungsweg des beweglichen Körpers über die durch die Umgebungsinformationserfassungseinrichtung **(EI)** erfassten Informationen vor der Gegenstandsidentifikation und der Distanzbestimmung durch die Distanzbestimmungseinrichtung **(DD)** überlagert.

3. Zustandsüberwachungsvorrichtung eines beweglichen Körpers gemäß einem der vorhergehenden Ansprüche, wobei die Umgebungsinformationserfassungseinrichtung **(EI)** umfasst:

mindestens eine Bildaufnahmeeinrichtung **(IC),** die an dem beweglichen Körper angebracht ist, zum Beziehen eines Bildes der Umgebung des beweglichen Körpers und zum Ausgeben der Bildinformationen, wobei die Bildaufnahmeeinrichtung **(IC)** ein erstes Bild bei mindestens einem ersten Zustand des beweglichen Körpers bezieht und ein zweites Bild bei mindestens einem zweiten Zustand davon bezieht, wenn sich der bewegliche Körper von dem ersten Zustand zu dem zweiten Zustand bewegt;
eine Merkmalpunktverfolgungseinrichtung **(FP)** zum Erfassen einer Koordinate eines Merkmalpunkts in dem ersten Bild bei dem ersten Zustand des beweglichen Körpers und zum Erfassen einer Koordinate, die dem Merkmalpunkt entspricht, in dem zweiten Bild bei dem zweiten Zustand davon,
eine Bewegungszustandserfassungseinrichtung **(MC)** zum Erfassen einer Position und Lage des beweglichen Körpers bei dem ersten und/oder dem zweiten Zustand; und
eine Abschätzeinrichtung dreidimensionaler Koordinaten **(TD)** zum Abschätzen einer dreidimensionalen Koordinate des Merkmalpunkts basierend auf der Position und der Lage des beweglichen Körpers bei dem durch die Bewegungszustandserfassungseinrichtung **(MC)** erfassten ersten und zweiten Zustand, der Koordinate des Merkmalpunkts in dem ersten Bild bei dem ersten Zustand des beweglichen Körpers und der Koordinate, die dem Merkmalpunkt entspricht, in dem zweiten Bild bei dem zweiten Zustand.

4. Zustandserfassungsvorrichtung eines beweglichen Körpers gemäß einem der vorhergehenden Ansprüche, weiterhin mit:

einer Informationskombiniereinrichtung **(CB)** zum Korrigieren der durch die Umgebungsinformationserfassungseinrichtung **(EI)** erfassten Informationen als Antwort auf eine Positions- und Lagebeziehung des beweglichen Körpers hinsichtlich der Umgebung, die den beweglichen Körper umgibt, bei einem Ereignis, wenn sich der bewegliche Körper bewegt, und zum Ausgeben der korrigierten Informationen;
einer Erzeugungseinrichtung einer spezifischen Ansicht **(SV)** zum Erzeugen einer spezifischen Ansicht des beweglichen Körpers bezüglich Informationen einer Umgebung, die den beweglichen Körper umgibt, bei einer spezifischen Position, basierend auf den aus der Informationskombiniereinrichtung **(CB)** ausgegebenen Informationen; und
einer Anzeigeeinrichtung **(VD)** zum Anzeigen der durch die Erzeugungseinrichtung einer spezifischen Ansicht **(SV)** erzeugten spezifischen Ansicht als ein Bild,
wobei die Anzeigeeinrichtung **(VD)** die Positionsbeziehung des beweglichen Körpers hinsichtlich des Gegenstands zusammen mit der spezifischen Ansicht als ein Bild auf einem an dem beweglichen Körper angebrachten Monitor anzeigt.

5. Zustandsüberwachungsvorrichtung eines beweglichen Körpers gemäß Anspruch 3 oder 4, wobei die Wegabschätzeinrichtung **(TE)** den Bewegungsweg des beweglichen Körpers basierend auf der Erfassung durch die Bewegungszustandserfassungseinrichtung **(MC)** abschätzt.

6. Zustandsüberwachungsvorrichtung eines beweglichen Körpers gemäß einem der vorhergehenden Ansprüche, wobei die Hinweiseinrichtung **(AL)** entweder eine Anzeigeeinheit **(DU)** zum Anzeigen der Positionsbeziehung zwischen dem beweglichen Körper und dem Gegenstand als das Bild auf dem an dem beweglichen Körper angebrachten Monitor und/oder eine Geräuscheinheit **(SU)** zum akustischen Übertragen der Positionsbeziehung zwischen dem beweglichen Körper und dem Gegenstand umfasst.

7. Zustandsüberwachungsvorrichtung eines beweglichen Körpers gemäß Anspruch 6, wobei die Hinweiseinrichtung **(AL)** eine Ausgabe auf der Anzeigeeinheit **(DU)** und/oder der Geräuscheinheit **(SU)** als Antwort auf die Distanz zwischen einem Abschnitt eines Fahrzeugs und dem Abschnitt des entlang des Bewegungsweges auftretenden Gegenstands, die durch die Distanzbestimmungseinrichtung **(DD)** abgeschätzt wird, anpasst, wenn der bewegliche Körper dem Fahrzeug entspricht.

8. Zustandsüberwachungsvorrichtung eines beweglichen Körpers gemäß Anspruch 6, wobei die Anzeigeeinheit **(DU)** den Abschnitt des Gegenstands spezifiziert, der sich dem Abschnitt des beweglichen Körpers entlang des abgeschätzten Bewegungsweges des beweglichen Körpers am nächsten befindet.

**Revendications**

1. Appareil de surveillance de la situation d'un corps mobile **caractérisé en ce que** l'appareil comprend:

   un moyen de détection d'informations concernant l'environnement (EI) pour détecter et stocker des informations concernant l'environnement entourant un corps mobile; et
   un moyen d'estimation de voie (TE) pour l'estimation d'une voie de déplacement du corps mobile,
   **caractérisé par**
   un moyen de détermination de distance (DD) pour identifier une substance apparaissant le long de la voie de déplacement estimée du corps mobile et pour déterminer la distance la plus courte s'étendant le long de la voie de déplacement estimée du corps mobile entre une partie du corps mobile et une partie de la substance qui sont en contact entre elles lorsque le corps mobile se déplace le long de la voie de déplacement estimée du corps mobile; et
   un moyen d'alerte (AL) pour avertir d'une relation de position entre le corps mobile et la substance selon le résultat déterminé par le moyen de détermination de distance (DD).

2. Appareil de surveillance de la situation d'un corps mobile selon la revendication 1, dans lequel le moyen de détermination de distance (DD) chevauche la voie de déplacement du corps mobile estimée par le moyen d'estimation de voie (TE) selon les informations concernant l'environnement détectées par le moyen de détection d'informations concernant l'environnement (EI) avant l'identification de la substance et la détermination de la distance par le moyen de détermination de distance (DD).

3. Appareil de surveillance de la situation d'un corps mobile selon l'une quelconque des revendications précédentes, dans lequel le moyen de détection d'informations concernant l'environnement (EI) comprend:

   au moins un moyen de capture d'image (IC) monté sur le corps mobile pour obtenir une image de l'espace entourant le corps mobile et pour délivrer en sortie les informations d'image, le moyen de capture d'image (IC) obtenant une première image au moins dans un premier état du corps mobile et obtenant une deuxième image au moins dans un deuxième état de celui-ci lorsque le corps mobile passe du premier état au deuxième état;
   un moyen de poursuite de point caractéristique (FP) pour détecter une coordonnée d'un point caractéristique dans la première image au premier état du corps mobile et pour détecter une coordonnée, qui correspond au point caractéristique, dans la deuxième image au deuxième état de celui-ci,
   un moyen de détection de condition de déplacement (MC) pour détecter une position et une posture du corps mobile au moins au premier et au deuxième état; et
   un moyen d'estimation de coordonnée tridimensionnelle (TD) pour estimer une coordonnée tridimensionnelle du point caractéristique sur la base de la position et de la posture du corps mobile dans le premier et le deuxième état détectés par le moyen de détection de condition de déplacement (MC), la coordonnée du point caractéristique dans la première image dans le premier état du corps mobile, et la coordonnée, qui correspond au point caractéristique, dans la deuxième image dans le deuxième état.

4. Appareil de surveillance de la situation d'un corps mobile selon l'une quelconque des revendications précédentes **caractérisé en ce que** l'appareil comprend en plus:

   un moyen de combinaison d'informations (CB) pour corriger les informations détectées par le moyen de détection d'informations concernant l'environnement (EI) en réponse à une relation de position et de posture du corps mobile par rapport à l'environnement entourant le corps mobile à l'occasion du déplacement du corps mobile et pour délivrer en sortie les informations corrigées;
   un moyen de création de vue spécifique (SV) pour créer une vue spécifique du corps mobile en se rapportant à des informations concernant l'environnement entourant le corps mobile à une position spécifique selon les informations sorties depuis le moyen de combinaison d'informations (CB); et
   un moyen d'affichage (VD) pour afficher la vue spécifique crée par le moyen de création de vue spécifique (SV) en tant qu'image,
où le moyen d'affichage (VD) affiche la relation de position du corps mobile par rapport à la substance en même temps que la vue spécifique comme étant l'image sur un moniteur monté sur le corps mobile.

5. Appareil de surveillance de la situation d'un corps mobile selon la revendication 3 ou 4, dans lequel le moyen d'estimation de voie (TE) estime la voie de déplacement du corps mobile sur la base de la détection par le moyen de détection de condition de déplacement (MC).

6. Appareil de surveillance de la situation d'un corps mobile selon l'une quelconque des revendications précédentes, dans lequel le moyen d'alerte (AL) comporte au moins soit une unité d'affichage (DU) pour afficher la relation de position entre le corps mobile et la substance comme étant l'image dans le moniteur monté sur le corps mobile ou une unité sonore (SU) pour transmettre de manière auditive la relation de position entre le corps mobile et la substance.

7. Appareil de surveillance de la situation d'un corps mobile selon la revendication 6, dans lequel le moyen d'alerte (AL) ajuste au moins une sortie depuis l'unité d'affichage (DU) ou l'unité sonore (SU) en réponse à la distance entre une partie d'un véhicule et la partie de la substance apparaissant le long de la voie de déplacement estimée par le moyen de détermination de distance (DD) lorsque le corps mobile correspond au véhicule.

8. Appareil de surveillance de la situation d'un corps mobile selon la revendication 6, dans lequel l'unité d'affichage (DU) spécifie la partie de la substance qui est la plus proche de la partie du corps mobile le long de la voie de déplacement estimée du corps mobile.

FIG. 1

Track estimating means — TR

Environment information detecting means — EI
- Image capturing means — IC
- Feature point tracking means — FP
- Moving condition detecting means — MC
- Three-dimensional coordinate estimating means — TD

Distance determining means — DD

Information combining means — CB

Specific view creating means — SV

Alerting means — AL
- Sound unit — SU
- Display unit — DU
- Displaying means — VD

# F I G. 2

# FIG. 3

Electronic control unit 10

Camera 2

Superimposing module 14

Graphics drawing module 13

Image recognizing module 12

Steering angle sensor 4

Shift lever switch 6

Vehicle wheel speed sensor 7

CPU 11

Audio outputting module 15

Monitor 8

Speaker 9

EP 1 403 137 B1

19

# F I G. 4

FIG. 5

# FIG. 6

# F I G. 7

EP 1 403 137 B1

F I G. 8

24

# FIG. 9

# FIG. 10

# FIG. 11

# FIG. 12

Rear collision imminent

# FIG. 13

OV

8c

8

8b

8d

You need stop !

# FIG. 14

1

8c

OB

8b

8

# FIG. 15

EP 1 403 137 B1

# FIG. 16

# FIG. 17

# FIG. 18

# FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62278477 A
- JP 1141137 A
- JP 2001187553 A
- JP 2002052999 A
- EP 1005234 A2

### Non-patent literature cited in the description

- **KOICHIRO DEGUCHI.** Solve a Stereophonic mechanism. *Information Processing,* 1996, vol. 37 (7
- Three-dimensional shape reconstruction by a stereo vision. **KANATANI.** Mathematics of Spatial data. Asakura, Inc, 10 March 1995
- **KOICHIRO DEGUCHI.** Manipulation of Videos. *Information Processing,* 1996, vol. 37 (8